# EUROPEAN PATENT SPECIFICATION

(11) **EP 2 991 440 B1**
(45) Date of publication and mention of the grant of the patent: **06.06.2018**
(21) Application number: 13893385.8
(22) Date of filing: 13.09.2013
(51) Int. Cl.: H04W 76/04, H04W 88/04

(54) **METHOD AND DEVICE FOR CONNECTING TO NETWORK**
VERFAHREN UND VORRICHTUNG ZUR VERBINDUNG MIT EINEM NETZWERK
PROCÉDÉ ET DISPOSITIF DE CONNEXION À UN RÉSEAU

(43) Date of publication of application: 02.03.2016
(73) Proprietor: Huawei Device (Dongguan) Co., Ltd., Dongguan, Guangdong 523808 (CN)
(72) Inventor: JIN, Hui, Shenzhen Guangdong 518129 (CN); OUYANG, Guowei, Shenzhen Guangdong 518129 (CN); YI, Qiang, Shenzhen Guangdong 518129 (CN)
(74) Representative: Gill Jennings & Every LLP
(86) International application number: PCT/CN2013/083507
(87) International publication number: WO 2015/035621

(56) References cited:
- WO-A1-2013/114648
- WO-A1-2013/131234
- CN-A- 1 889 482
- CN-A- 101 098 180
- TW-A- 201 108 813
- US-A1- 2013 016 630
- RENESAS MOBILE EUROPE LTD: "Connection setup via ProSe UE-to-Network Relay", 3GPP DRAFT; S2-131971_CONNECTION VIA UE-TO_NETWORK RELAY_V2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Busan, South Korea; 20130527 - 20130531 21 May 2013 (2013-05-21), XP050709143, Retrieved from the Internet: URL:http://www.3gpp.org/ftp/tsg_sa/WG2_Arc h/TSGS2_97_Busan/Docs/ [retrieved on 2013-05-21]
- "3rd Generation Partnership Project; Technical Specification Group Services and System Aspects; Study on architecture enhancements to support Proximity Services (ProSe) (Release 12)", 3GPP STANDARD; 3GPP TR 23.703, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V0.3.0, 26 April 2013 (2013-04-26), pages 1-26, XP050692467, [retrieved on 2013-04-26]
- Yangyang Chen ET AL: "Architecture and Protocols of EPC-LTE with relay", Collection des rapports de recherche & preprints de TELECOM Bretagne, RR-2013-02-RSM, 1 June 2013 (2013-06-01), pages 1-26, XP055277450, Brest, FR Retrieved from the Internet: URL:https://portail.telecom-bretagne.eu/pu bli/public/fic_download.jsp?id=17332 [retrieved on 2016-06-02]

## Description

### TECHNICAL FIELD

The present invention relates to the field of communications technologies, and in particular, to a method, an apparatus, and a system for connecting to a network.

### BACKGROUND

In a conventional mobile network, when user equipment (User Equipment, UE) is not located within a coverage area of a network, the UE cannot connect to the network. To solve a problem that UE cannot connect to a network when the UE is not located within a coverage area of the network, a solution is proposed in the prior art that when UE is not located within a coverage area of a network, the UE may connect to a relay terminal relay UE, and then, the UE connects to the network by using the relay UE, so as to transmit data. The relay UE has a function of providing a connection to a network for another UE that is not located within a coverage area of the network.

Specifically, the relay UE establishes a radio resource control (Radio Resource Control, RRC) connection with a base station; after the relay UE attaches to the network, and a packet data network gateway (Packet Data Network Gateway, PGW) assigns an IPv6 address prefix to the relay UE, the relay UE sends, to the UE, a message that carries an identity (Identity, ID) of the relay UE, so that the UE actively connects to the relay UE. After the UE connects to the relay UE, the relay UE assigns an IP address to the UE, thereby implementing that the UE that is not located within the coverage area of the network can connect to the network.

However, when UE is not located within a coverage area of a network or does not actively initiate a connection to the network, if a network side needs to send data to the UE, a normal transmission process cannot be performed to transmit the data. There is no solution to such a problem in the prior art.

3GPP S2-131971 describes a procedure to setup a connection between a public safety ProSe-enabled UE and E-UTRAN via a ProSe UE-to-network relay.

3GPP TR 23.703 v 0.3.0 describes 3GPP enhancements for supporting ProSe.

Telecom Bretagne RR-2013-02-RSM describes aspects of relays in LTE.

WO 2013/131234 A1 describes relaying traffic using D2D communication.

WO 2013/114648 A1 describes aspects of relaying traffic in 3GPP.

### SUMMARY

Embodiments of the present invention provide a method, and an mobility management entity, MME, for connecting to a network, which are used to solve a problem how a network side actively initiates a process of enabling UE that is not located within a coverage area of a network to connect to the network.

Aspects of the invention are set out in the claims.

According to the method, and the MME for connecting to a network that are provided in the embodiments of the present invention, an MME receives a delete context request that carries instruction information and that is sent by a base station, wherein the delete context request is used to notify the MME that the UE loses a connection to a network, and the instruction information is used to instruct the MME to report to a server that the UE loses a connection to a network; the MME sends a first message to a server, where the first message is used to notify the server that UE loses a connection to a network; the MME receives a second message sent by the server, where the second message is used to instruct the MME to perform a relay process, and the relay process specifically includes: acquiring, by the MME, a list of candidate relay UEs that relay the UE, and sending a third message to candidate relay UE in the list of candidate relay UEs, where the third message is used to instruct the candidate relay UE in the list of candidate relay UEs to send a fourth message to the UE, and the fourth message is used by the UE to determine selected relay UE and connect to a network by using the selected relay UE. In the prior art, when UE that is not located within a coverage area of a network needs to connect to the network, the UE actively selects and determines relay UE, and then connects to the relay UE, thereby implementing a connection to the network. However, when a network side needs to send data to the UE that is not located within the coverage area of the network and that is not connected to relay UE, there is no method for implementing interaction between the network side and the UE in the prior art, thereby preventing the UE from receiving data from the network side, and causing relatively poor user experience. In the embodiments, it may be implemented that a network side actively initiates a process of enabling UE that is not located within a coverage area of a network to connect to the network, thereby improving user experience.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and persons of ordinary skill in the art may still derive other drawings from these accompanying drawings without creative efforts.
FIG. 1 is a flowchart of a method for connecting to a network according to an embodiment of the present invention;
FIG. 2 is a flowchart of another method for connecting to a network according to an embodiment not covered by the claims, but useful for understanding the invention;
FIG. 3 is a flowchart of still another method for connecting to a network according to an embodiment not covered by the claims, but useful for understanding the invention;
FIG. 4 is a flowchart of a method for sending a first message to a server by an MME in a method for connecting to a network according to an embodiment of the present invention;
FIG. 5 is a flowchart of another method for sending a first message to a server by an MME in a method for connecting to a network according to an embodiment of the present invention;
FIG. 6 is a flowchart of a manner of acquiring a list of candidate relay UEs by an MME in a method for connecting to a network according to an embodiment of the present invention;
FIG. 7 is a flowchart of another manner of acquiring a list of candidate relay UEs by an MME in a method for connecting to a network according to an embodiment of the present invention;
FIG. 8A and FIG. 8B are a flowchart of yet another method for connecting to a network according to an embodiment of the present invention;
FIG. 9 is a schematic structural diagram of an apparatus for connecting to a network according to an embodiment of the present invention;
FIG. 10 is a schematic structural diagram of another apparatus for connecting to a network according to an embodiment of the present invention;
FIG. 11 is a schematic structural diagram of still another apparatus for connecting to a network according to an embodiment not covered by the claims, but useful for understanding the invention;
FIG. 12 is a schematic structural diagram of yet another apparatus for connecting to a network according to an embodiment not covered by the claims, but useful for understanding the invention;
FIG. 13 is a schematic structural diagram of still yet another apparatus for connecting to a network according to an embodiment not covered by the claims, but useful for understanding the invention;
FIG. 14 is a structural diagram of hardware of an MME in a method for connecting to a network according to an embodiment of the present invention;
FIG. 15 is a structural diagram of hardware of UE in a method for connecting to a network according to an embodiment not covered by the claims, but useful for understanding the invention;
FIG. 16 is a structural diagram of hardware of a server in a method for connecting to a network according to an embodiment not covered by the claims, but useful for understanding the invention; and
FIG. 17 is a schematic structural diagram of a system for connecting to a network according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention.

It should be noted that, for a method for connecting to a network provided in an embodiment of the present invention, the method is implemented on a premise that UE is directly connected to a core network. A connection to the network is lost (lost a connection to the network) for some reasons (for example, a signal becomes weak), so that the UE is located beyond a coverage area of the network.

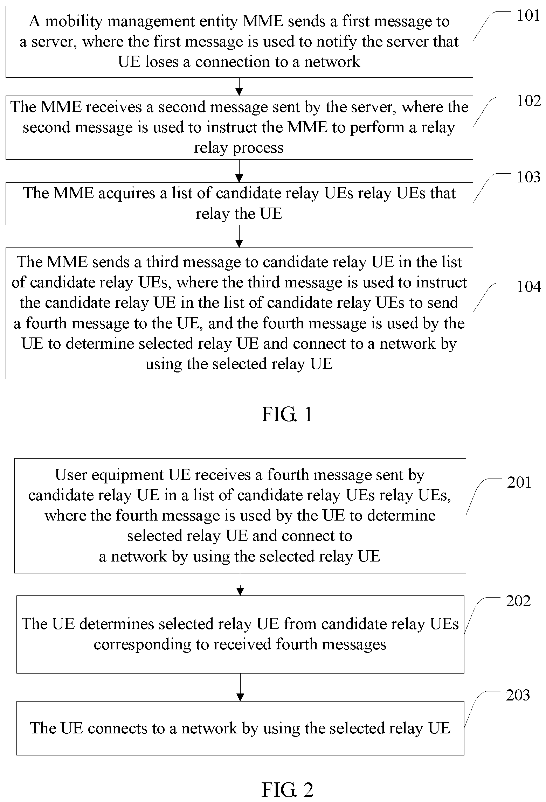

When the core network needs to connect to the UE, as shown in FIG. 1, the following operations need to be performed:
101. An MME sends a first message to a server, where the first message is used to notify the server that UE loses a connection to a network.

The server is used for registration of a terminal, performs authentication and certification on a behavior of the terminal, and stores subscription data of the terminal and the like. In this embodiment, the server may be a proximity discovery and communication control functionality (Proximity Discovery and Communication control Functionality, PDCF) device, a proximity service server (Proximity Service Server, Prose), a proximity service functionality (Proximity Service Functionality, PSF) entity, or the like.

The first message includes an identity (Identity, ID) of the UE. The ID of the UE may be an international mobile subscriber identity (International Mobile Subscriber Identity, IMSI), or a service ID of the UE (such as a proximity services (Proximity Services, Prose) ID). Optionally, the UE in this embodiment may be public safety (Public Safety, PS) UE.

Before sending the first message to the server, the MME needs to learn whether to report to the server that the UE loses a connection to a network. When the MME learns a manner of reporting to the server that the UE loses a connection to a network, the MME sends the first message to the server. When the MME learns the manner of reporting to the server that the user equipment UE loses a connection to a network, there are two conditions in which the MME needs to send the first message to the server.

In a first condition, the MME receives a seventh message that carries instruction information and that is sent by a base station, where the seventh message is used to notify the MME that the UE loses a connection to a network, and the instruction information is used to instruct the MME to report to the server that the UE loses a connection to a network. It should be noted that, the instruction information is information that the UE is a PS UE. An ID (service ID) of the PS UE is carried in the seventh message. Therefore, when receiving the seventh message, the MME learns, according to content of the seventh message, that the PS UE loses a connection to a network, and then sends the first message to the server according to the instruction information.

In a second condition, the MME receives a subscription request sent by the server, where the subscription request is a request for the server to subscribe to a state, of losing a connection to a network, of the UE. Therefore, when learning that the UE loses a connection to a network, the MME sends the first message to the server according to the subscription request. It may be understood that, in this condition, the UE may be PS UE or UE in a general situation.

102. The MME receives a second message sent by the server, where the second message is used to instruct the MME to perform a relay process.

Before the MME receives the second message sent by the server, the server determines whether the UE needs to connect to a network by using relay UE; when determining that the UE needs to connect to the network by using the relay UE, the server sends the second message to the MME, so that the MME starts to perform a relay process for the UE. Specifically, in this embodiment, the second message may be a relay initial request. Optionally, when the first message includes the IMSI of the UE, the second message may include the service ID (Prose ID) of the UE. The second message carries the Prose ID, so that the MME does not need to actively acquire the Prose ID, thereby improving efficiency of a network connection of the UE.

It should be noted that, the following steps 103 to 104 are steps of executing the relay process by the MME.

103. The MME acquires a list of candidate relay UEs that relay the UE.

After receiving the second message, the MME acquires the list of candidate relay UEs that relay the UE. An ID of relay UE that is suitable to be used as relay UE for the UE is included in the list of candidate relay UEs. Conditions of relay UE that is suitable for the UE include the following three points: first, the relay UE is relay UE; second, the relay UE is located in a same cell as the UE or located in a neighboring cell of a cell in which the UE is located; third, the relay UE has a same access point name (Access Point Name, APN) as the UE. For example, both candidate relay UE in the list of candidate relay UEs and the UE are CMCC. When meeting the first condition and the second condition in the foregoing conditions, or the foregoing three conditions, relay UE may be used as candidate relay UE.

104. The MME sends a third message to candidate relay UE in the list of candidate relay UEs, where the third message is used to instruct the candidate relay UE in the list of candidate relay UEs to send a fourth message to the UE, and the fourth message is used by the UE to determine selected relay UE and connect to a network by using the selected relay UE.

In this embodiment, the third message may be a relay active request, where the third message includes the service ID (Prose ID) of the UE.

According to the method for connecting to a network provided in this embodiment of the present invention, an MME sends a first message to a server, where the first message is used to notify the server that UE loses a connection to a network; the MME receives a second message sent by the server, where the second message is used to instruct the MME to perform a relay process, and the relay process specifically includes: acquiring, by the MME, a list of candidate relay UEs that relay the UE, and sending a third message to candidate relay UE in the list of candidate relay UEs, where the third message is used to instruct the candidate relay UE in the list of candidate relay UEs to send a fourth message to the UE, and the fourth message is used by the UE to determine selected relay UE and connect to a network by using the selected relay UE. In the prior art, when UE that is not located within a coverage area of a network needs to connect to the network, the UE actively selects and determines relay UE, and then connects to the relay UE, thereby implementing a connection to the network. However, when a network side needs to send data to the UE that is not located within the coverage area of the network and that is not connected to relay UE, there is no method for implementing interaction between the network side and the UE in the prior art, thereby preventing the UE from receiving data from the network side, and causing relatively poor user experience. In this embodiment, it may be implemented that a network side actively initiates a process of enabling UE that is not located within a coverage area of a network to connect to the network, thereby improving user experience.

As shown in FIG. 2, an embodiment not covered by the claims, but useful for understanding the invention, provides another method for connecting to a network, where the method is as follows:
201. UE receives a fourth message sent by candidate relay UE in a list of candidate relay UEs, where the fourth message is used by the UE to determine selected relay UE and connect to a network by using the selected relay UE.

After receiving a third message sent by an MME, each candidate relay UE in the list of candidate relay UEs sends a fourth message to the UE in a broadcast manner. The fourth message sent by each candidate relay UE includes an ID (Prose ID) of an initiator (candidate relay UE).

Optionally, the fourth message further includes an ID of the UE.

202. The UE determines selected relay UE from candidate relay UEs corresponding to received fourth messages.

After receiving the fourth messages, the UE selects a suitable candidate relay UE as relay UE of the UE. The UE may use, for example, strong signal strength and close proximity to the UE, as a condition of the selected relay UE.

It should be noted that, when the fourth message includes the ID of the initiator (candidate relay UE), each UE (all UEs covered in a same area, which include the UE in this embodiment) that receives the fourth message separately sends a first request to relay UE that is suitable to be used as a relay of the UE; relay UE that receives the first request sent by each UE performs selection according to the ID of the UE in the third message, and selects the UE in this embodiment. In this way, a correspondence appears, that is, the UE is corresponding to the selected relay UE. The first request may be a relay connection request. The first request is used to request relay UE to forward relay data, where the relay data is data that the UE needs to send to another party through a network.

When the fourth message includes the ID of the initiator and the ID of the UE, the UE selects suitable relay UE as the selected relay UE after receiving the fourth messages.

203. The UE connects to a network by using the selected relay UE.

According to the method for connecting to a network provided in this embodiment not covered by the claims, but useful for understanding the invention, UE receives a fourth message sent by candidate relay UE in a list of candidate relay UEs, where the fourth message is used by the UE to determine selected relay UE and connect to a network by using the selected relay UE; the UE determines selected relay UE from candidate relay UEs corresponding to received fourth messages, and connects to a network by using the selected relay UE. In the prior art, when UE that is not located within a coverage area of a network needs to connect to the network, the UE actively selects and determines relay UE, and then connects to the relay UE, thereby implementing a connection to the network. However, when a network side needs to send data to the UE that is not located within the coverage area of the network and that is not connected to relay UE, there is no method for implementing interaction between the network side and the UE in the prior art, thereby preventing the UE from receiving data from the network side, and causing relatively poor user experience. In this embodiment, it may be implemented that a network side actively initiates a process of enabling UE that is not located within a coverage area of a network to connect to the network, thereby improving user experience.

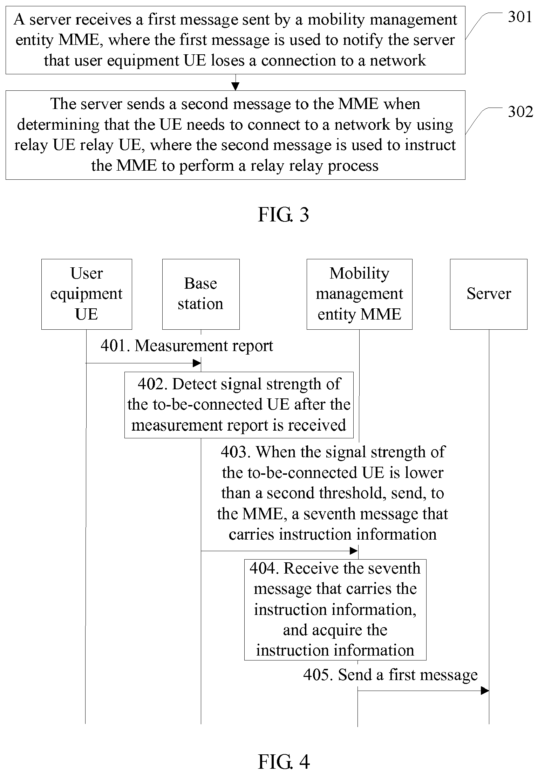

As shown in FIG. 3, an embodiment not covered by the claims, but useful for understanding the invention, provides still another method for connecting to a network, where the method is as follows:
301. A server receives a first message sent by an MME, where the first message is used to notify the server that UE loses a connection to a network.

The first message includes an ID (IMSI or Prose ID) of the UE.

After receiving the first message, the server determines whether the UE corresponding to the ID of the UE that is carried in the first message needs to connect to a network by using relay UE. Generally, in a case in which UE loses a connection to a network, whether the UE needs to connect to the network by using relay UE is preset by an operator.

It should be noted that, the server in this embodiment may be a PDCF device, a Prose device, a PSF entity, or the like.

302. The server sends a second message to the MME when determining that the UE needs to connect to a network by using relay UE, where the second message is used to instruct the MME to perform a relay process.

For a manner of performing the relay process by the MME, reference may be made to the descriptions in steps 103 to 104 in FIG. 1.

According to the method for connecting to a network provided in this embodiment not covered by the claims, but useful for understanding the invention, a server receives a first message sent by an MME, where the first message is used to notify the server that UE loses a connection to a network; the server sends a second message to the MME when determining that the UE needs to connect to a network by using relay UE, where the second message is used to instruct the MME to perform a relay process. In the prior art, when UE that is not located within a coverage area of a network needs to connect to the network, the UE actively selects and determines relay UE, and then connects to the relay UE, thereby implementing a connection to the network. However, when a network side needs to send data to the UE that is not located within the coverage area of the network and that is not connected to relay UE, there is no method for implementing interaction between the network side and the UE in the prior art, thereby preventing the UE from receiving data from the network side, and causing relatively poor user experience. In this embodiment, it may be implemented that a network side actively initiates a process of enabling UE that is not located within a coverage area of a network to connect to the network, thereby improving user experience.

With reference to the method for connecting to a network in FIG. 1, an embodiment of the present invention provides a method for sending a first message to a server by an MME when the MME learns a manner of reporting to the server that UE loses a connection to a network in the method for connecting to a network. As shown in FIG. 4, the method is as follows:
401. UE sends a measurement report to a base station.

When the UE detects that its signal strength is lower than a first threshold, it indicates that the signal strength is relatively low. In this case, the UE is located beyond a coverage area of a network and needs to send a measurement report to the base station, where the measurement report is used to notify the base station that the signal strength of the UE is relatively low. The measurement report carries information that the UE is PS UE, information that the signal strength of the UE is relatively low, and an ID of the UE.

402. The base station detects signal strength of the UE after receiving the measurement report.

When detecting that the signal strength of the UE is lower than a second threshold, the base station continues to perform step 403;
when the base station detects that the signal strength of the UE is higher than or equal to the second threshold, this operation ends.

It may be understood that, in FIG. 4, the first threshold in step 401 may be the same as the second threshold, or may be different from the second threshold. This embodiment sets no limitation thereto.

403. When the signal strength of the UE is lower than a second threshold, the base station sends, to an MME, a seventh message that carries instruction information.

The instruction information is used to instruct the MME to report to a server that the UE loses a connection to a network. In accordance with the invention as defined by the claims, the seventh message is a delete context request. Generally, in the prior art, when the base station detects that the signal strength of the UE is lower than the second threshold, the Delete Context request sent to the MME does not carry the instruction information, and therefore, in the prior art, when learning that the UE is located beyond a coverage area of a network, a network side cannot actively trigger the UE to connect to the network, that is, in the prior art, when receiving the Delete Context request, the MME does not send the first message described in step 101 in FIG. 1 to the server.

404. The MME receives the seventh message that carries the instruction information, and acquires the instruction information.

405. The MME sends a first message to a server.

By using instruction information in this embodiment of the present invention, it may be implemented that an MME sends a first message to a server when UE is in a state of losing a connection to a network, so that after receiving the first message, the server learns a situation that the UE loses a connection to a network.

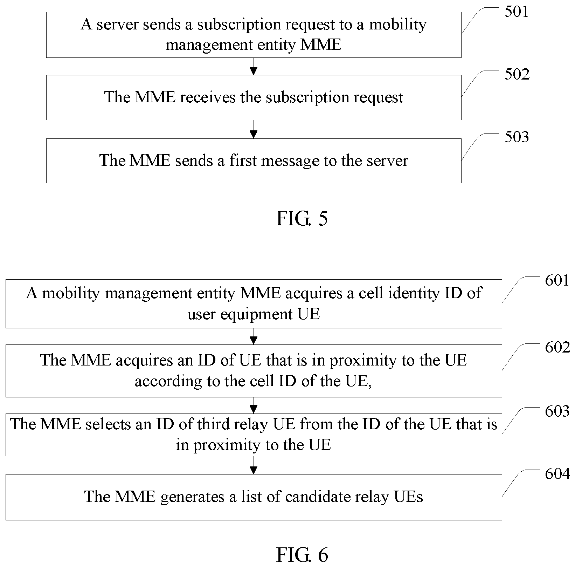

With reference to the method for connecting to a network in FIG. 1, an embodiment of the present invention provides another method for sending a first message to a server by an MME when the MME learns a manner of reporting to the server that user equipment UE loses a connection to a network in the method for connecting to a network. As shown in FIG. 5, the method is as follows:
501. A server sends a subscription request to an MME.

The subscription request is a request for the server to subscribe to a state, of losing a connection to a network, of UE, where
the subscription request includes an ID (IMSI or Prose ID) of the UE.

502. The MME receives the subscription request.

503. The MME sends a first message to the server.

After the MME receives the subscription request, a base station sends a Delete Context request to the MME when detecting that signal strength of the UE is relatively low. It should be noted that, the Delete Context request does not carry instruction information. After receiving the Delete Context request, the MME learns that the UE loses a connection to a network, and sends the first message to the server according to content of the subscription request (the server subscribes to the state, of losing a connection to a network, of the UE).

A subscription request is used in this embodiment, so that a measurement report sent by UE to a base station can be omitted. When detecting that signal strength of the UE is lower than a threshold, the base station sends, to an MME, a delete context request that carries an ID of the UE; after receiving the delete context request, the MME learns that the UE loses a connection to a network, and then sends a first message to a server according to the subscription request, so that after receiving the first message, the server learns a situation that the UE loses a connection to a network.

With reference to the method for connecting to a network shown in FIG. 1, that the MME acquires the list of candidate relay UEs is described in step 103, where there are two manners of acquiring the list of candidate relay UEs by the MME.

An embodiment of the present invention provides a manner of acquiring a list of candidate relay UEs by an MME in a method for connecting to a network. As shown in FIG. 6, the manner is as follows:
601. An MME acquires a cell ID of UE.

The cell ID of the UE may be an evolved universal mobile telecommunications system terrestrial radio access network cell global identifier (E-UTRAN Cell Global Identifier, ECGI), where E-UTRAN is an evolved universal mobile telecommunications system terrestrial radio access network (Evolved Universal Mobile Telecommunications System Terrestrial Radio Access Network).

Optionally, the MME acquires the cell ID of the UE from a second message sent by a server, that is, the second message described in FIG. 1 and FIG. 3 may further include the cell ID of the UE. Alternatively, optionally, the MME acquires the cell ID of the UE by itself.

602. The MME acquires an ID of UE that is in proximity to the UE according to the cell ID of the UE.

Specifically, the MME acquires an ID of candidate relay UE (ID of first relay UE) that is located in a same cell as the UE and that relays the UE, and/or an ID of candidate relay UE (ID of second relay UE) that is located in a neighboring cell of a cell in which the UE is located and that relays the UE. It may be understood that, the first relay UE is at least one UE, and the second relay UE is at least one UE.

603. The MME selects an ID of third relay UE from the ID of the UE that is in proximity to the UE.

Specifically, the MME selects the ID of the third relay UE from the ID of the first relay UE and/or the ID of the second relay UE, where the third relay UE has a same APN as the UE. It may be understood that, the third relay UE is at least one UE.

It should be noted that, this step is an optional step. The MME may directly perform step 604 after performing step 602.

604. The MME generates a list of candidate relay UEs.

The list of candidate relay UEs includes the ID of the candidate relay UE that is located in the same cell as the UE and that relays the UE, and/or the ID of the candidate relay UE that is located in the neighboring cell of the cell in which the UE is located and that relays the UE, that is, the list of candidate relay UEs includes the ID of the first relay UE and/or the ID of the second relay UE.

Optionally, when the MME generates the list of candidate relay UEs after performing step 603, the list of candidate relay UEs includes the ID of the third relay UE. By performing step 603 by the MME, a range of acquiring an ID of UE that is in proximity to the UE can be effectively narrowed, a quantity of third relay UEs included in the generated list of candidate relay UEs is relatively small, and the third relay UE has relatively high precision, so that less radio resources are occupied when candidate relay UE sends a fourth message to the UE.

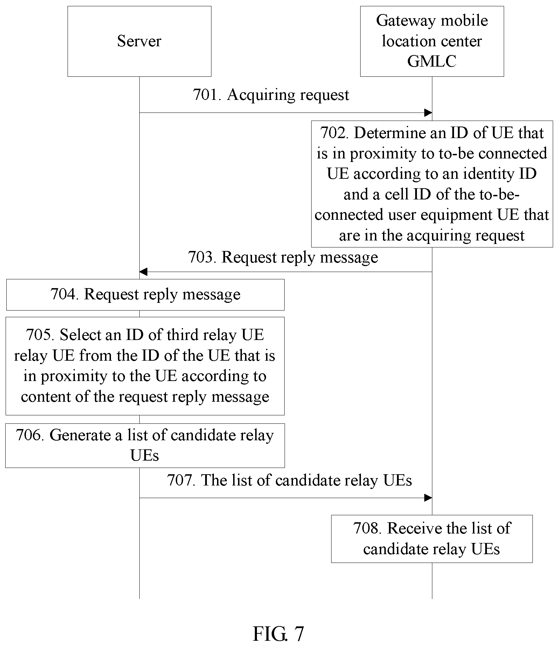

An embodiment of the present invention provides another manner of acquiring a list of candidate relay UEs by an MME in a method for connecting to a network. As shown in FIG. 7, the manner is as follows:
701. A server sends an acquiring request to a gateway mobile location center (Gateway Mobile Location Center, GMLC), where
the acquiring request includes an ID (IMSI) and a cell ID of UE.

It should be noted that, when an MME acquires a list of candidate relay UEs in the manner shown in FIG. 7, the first message described in FIG. 1 and FIG. 3 further includes the cell ID of the UE.

The GMLC is used to acquire a location of a mobile terminal.

702. The GMLC determines an ID of UE that is in proximity to the UE according to the ID and the cell ID of the UE that are in the acquiring request.

It may be understood that, the ID of the UE that is in proximity to the UE may be an ID of candidate relay UE (ID of first relay UE) that is located in a same cell as the UE and that relays the UE, and/or an ID of candidate relay UE (ID of second relay UE) that is located in a neighboring cell of a cell in which the UE is located and that relays the UE.

703. The GMLC sends a request reply message to the server.

Specifically, the request reply message includes the ID of the UE that is in proximity to the UE (the ID of the first relay UE and/or the ID of the second relay UE).

704. The server receives the request reply message sent by the GMLC.

705. The server selects an ID of third relay UE from the ID of the UE that is in proximity to the UE according to content of the request reply message.

The third relay UE is UE that has a same access point name APN as the UE. Specifically, the server selects, according to the content of the request reply message, the ID of the third relay UE from the ID of the first relay UE and/or the ID of the second relay UE.

It should be noted that, this step is an optional step. The server may also directly perform step 706 after performing step 704 (after receiving the request reply message).

706. The server generates a list of candidate relay UEs.

The server directly generates the list of candidate relay UEs according to the content of the request reply message after receiving the request reply message, so that the list of candidate relay UEs includes the ID of the candidate relay UE (the ID of the first relay UE) that is located in the same cell as the UE and that relays the UE, and/or the ID of the candidate relay UE (the ID of the second relay UE) that is located in the neighboring cell of the cell in which the UE is located and that relays the UE.

The server continues to perform step 705 after receiving the request reply message, and then acquires the ID of the third relay UE, so that the list of candidate relay UEs includes the ID of the third relay UE.

707. The server sends the list of candidate relay UEs to an MME.

Specifically, the server may send the list of candidate relay UEs to the MME by using an independent message, or the server sends the second message described in FIG. 1 and FIG. 3 to the MME, where the second message is enabled to carry the list of candidate relay UEs. This embodiment sets no limitation on a manner of sending the list of candidate relay UEs by the server.

708. The MME receives the list of candidate relay UEs sent by the server.

In this embodiment, a GMLC determines an ID of UE that is in proximity to UE. Because the GMLC has relatively high locating precision, candidate relay UE in a finally determined list of candidate relay UEs is more close to the UE, that is, candidate relay UE is more precise, so that radio resources are saved when step 201 in FIG. 2 is being performed.

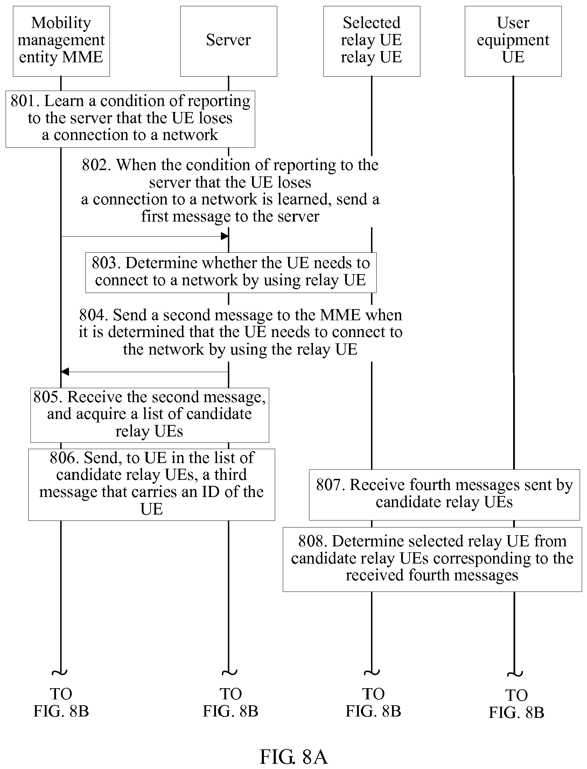

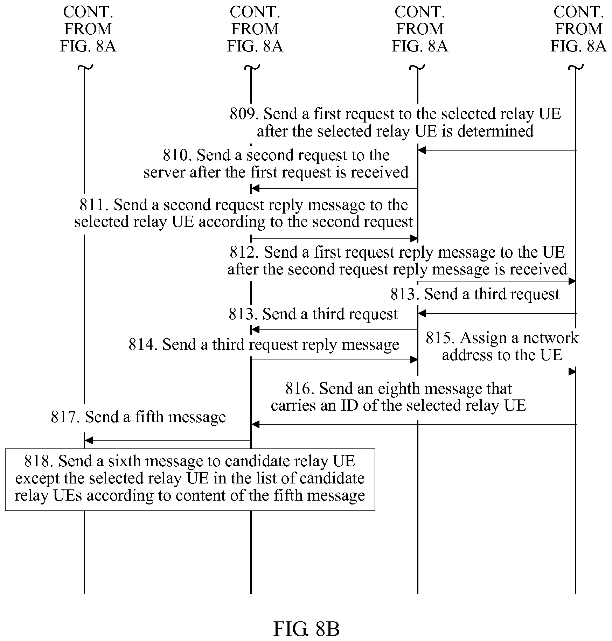

With reference to the methods for connecting to a network shown in FIG. 1 to FIG. 7, an embodiment of the present invention provides an implementation manner of connecting to a network. As shown in FIG. 8A and FIG. 8B, the implementation manner is as follows:
801. An MME learns a condition of reporting to a server that UE loses a connection to a network.

For a method for learning, by the MME, the condition of reporting to the server that the UE loses a connection to a network, reference may be made to a specific description in FIG. 4 or FIG. 5, and details are not described herein again.

802. The MME sends a first message to the server when learning the condition of reporting to the server that the UE loses a connection to a network.

The first message is used to notify the server that the UE loses a connection to a network.

803. The server determines whether the UE needs to connect to a network by using relay UE.

When the UE needs to connect to the network by using the relay UE, step 804 continues to be performed;
when the UE does not need to connect to the network by using the relay UE, this operation ends.

804. The server sends a second message to the MME when determining that the UE needs to connect to the network by using the relay UE.

The second message is used to instruct the MME to perform a relay process. Specifically, the following steps 805 to 806 are description of the relay process performed by the MME.

805. The MME receives the second message, and acquires a list of candidate relay UEs.

Optionally, the MME may generate the list of candidate relay UEs. Reference may be made to the specific steps described in FIG. 6.

Optionally, the MME may receive the list of candidate relay UEs sent by the server (acquire the list of candidate relay UEs from the second message; or acquire the list of candidate relay UEs from another independent message sent by the server). Reference may be made to the specific steps described in FIG. 7.

806. The MME sends, to UE in the list of candidate relay UEs, a third message that carries an ID of the UE.

The third message is used to instruct candidate relay UEs in the list of candidate relay UEs to send fourth messages to the UE.

807. The UE receives fourth messages sent by candidate relay UEs.

Specifically, the UE receives the fourth messages that are sent by the candidate relay UEs in the list of candidate relay UEs to the UE, where the fourth message is used by the UE to determine selected relay UE and connect to a network by using the selected relay UE.

808. The UE determines selected relay UE from the candidate relay UEs corresponding to the received fourth messages.

809. The UE sends a first request to the selected relay UE after determining the selected relay UE.

The first request includes a service ID (Prose ID) of the UE. The first request is used to request the selected relay UE to forward relay data, where the relay data is data that the UE needs to send to another party through a network.

810. The selected relay UE sends a second request to the server after receiving the first request.

The second request is used to request to acquire an authentication parameter of the UE, where the authentication parameter includes a random number.

811. The server sends a second request reply message to the selected relay UE according to the second request.

The second request reply message includes the authentication parameter of the UE.

It should be noted that, the server may serve at least one UE. Optionally, the UE is corresponding to a same server as the selected relay UE, or the UE and the selected relay UE are corresponding to different servers.

When the UE is corresponding to the same server as the selected relay UE, the server acquires the authentication parameter, and then sends, to the selected relay UE, the second request reply message that carries the authentication parameter.

When the UE and the selected relay UE are corresponding to different servers, for example, the UE is corresponding to a PDCF device, and the selected relay UE is corresponding to PDCF-relay UE, the server in this step is the PDCF-relay UE, that is, the PDCF-relay UE receives a relay connection request sent by the selected relay UE, and then sends, to the PDCF device, an authentication parameter acquiring request that carries the service ID (Prose ID) of the UE. The PDCF device receives the authentication parameter acquiring request, acquires the authentication parameter of the UE according to the service ID of the UE in the authentication parameter acquiring request, and then sends, to the PDCF-relay UE, an authentication parameter acquiring response that carries the authentication parameter. After acquiring the authentication parameter, the PDCF-relay UE sends, to the selected relay UE, the second request reply message that carries the authentication parameter.

812. The selected relay UE sends a first request reply message to the UE after receiving the second request reply message.

The first request reply message includes the authentication parameter.

The UE acquires the authentication parameter, and generates a corresponding authentication result. Specifically, the UE calculates the authentication parameter (random number) by using an encryption key, an encryption algorithm, or the like.

813. The UE sends a third request to the server by using the selected relay UE.

The third request is used to instruct the server to perform authentication on the authentication result. Specifically, the server detects whether the authentication result is correct, and when the authentication result is correct, it indicates that the UE is authorized UE, and then step 814 continues to be performed.

814. The server sends a third request reply message to the selected relay UE.

The third request reply message is a UE authentication success message.

815. The selected relay UE may assign a network address to the UE after receiving the third request reply message.

When the UE obtains the network address, it indicates that the UE successfully connects to a network. Afterwards, when the UE needs to send relay data, the selected relay UE directly forwards the relay data, but does not need to send the second request to the server.

816. The UE sends, to the server, an eighth message that carries an ID of the selected relay UE.

The eighth message is used to notify the server that the UE has connected to a network.

817. The server sends a fifth message to the MME.

The fifth message is used to instruct the MME to send a sixth message to candidate relay UE except the selected relay UE in the list of candidate relay UEs.

818. The MME sends, according to content of the fifth message, a sixth message to candidate relay UE except the selected relay UE in the list of candidate relay UEs.

The sixth message is used to instruct the candidate relay UE except the selected relay UE in the list of candidate relay UEs to stop sending the fourth message to the UE.

In this embodiment of the present invention, it is implemented that a network side actively initiates a process of enabling UE that is not located within a coverage area of a network to connect to the network, thereby improving user experience.

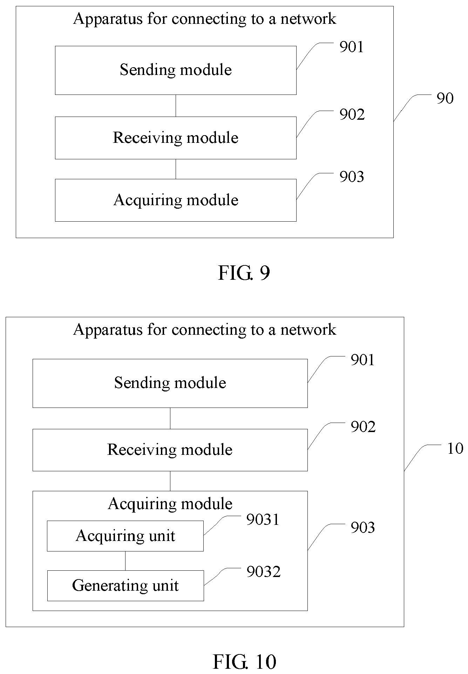

As shown in FIG. 9, an embodiment of the present invention provides an apparatus 90 for connecting to a network, including a sending module 901, a receiving module 902, and an acquiring module 903. The apparatus is the MME in the method embodiments.

The sending module 901 is configured to send a first message to a server, where the first message is used to notify the server that UE loses a connection to a network;
the receiving module 902 is configured to receive a second message sent by the server, where the second message is used to instruct the acquiring module 903 and the sending module 901 to perform a relay process; and
the acquiring module 903 is configured to acquire a list of candidate relay UEs that relay the UE, and provide the list of candidate relay UEs for the sending module 901, where
the sending module 901 is further configured to send a third message to candidate relay UE in the list of candidate relay UEs, where the third message is used to instruct the candidate relay UE in the list of candidate relay UEs to send a fourth message to the UE, and the fourth message is used by the UE to determine selected relay UE and connect to a network by using the selected relay UE.

It should be noted that, before the sending module 901 sends the first message to the server, the receiving module 902 is further configured to learn a condition of reporting to the server that the user equipment UE loses a connection to a network. Specifically, there are two manners of learning, by the receiving module 902, the condition of reporting to the server that the user equipment UE loses a connection to a network.

A first manner: The receiving module 902 receives a seventh message that carries instruction information and that is sent by a base station, where the seventh message is used to notify the apparatus 90 that the UE loses a connection to a network, and the instruction information is used to instruct the sending module 901 to report to the server that the UE loses a connection to a network.

A second manner: The receiving module 902 receives a subscription request sent by the server, where the subscription request is a request for the server to subscribe to a state, of losing a connection to a network, of the UE.

Further, the present invention further provides another apparatus 10 for connecting to a network, where the acquiring module 903 of the apparatus 10 for connecting to a network includes an acquiring unit 9031 and a generating unit 9032.

That the acquiring module 903 acquires the list of candidate relay UEs is specifically as follows:
Optionally, the acquiring module 903 acquires the list of candidate relay UEs from the second message received by the receiving module 902, where the second message includes the list of candidate relay UEs. A precondition is that the first message further includes a cell ID of the UE, that is, the first message sent by the sending module 901 to the server further includes the cell ID of the UE. Then, the server sends, to a GMLC, an acquiring request that carries the cell ID of the UE, so that the GMLC determines an ID of UE that is in proximity to the UE.

Optionally, the acquiring unit 9031 acquires an ID of candidate relay UE that is located in a same cell as the UE and that relays the UE, and/or an ID of candidate relay UE that is located in a neighboring cell of a cell in which the UE is located and that relays the UE; and provides an acquiring result for the generating unit 9032. The generating unit 9032 generates the list of candidate relay UEs according to the acquiring result provided by the acquiring unit 9031, where the list of candidate relay UEs includes the ID of the candidate relay UE that is located in the same cell as the UE and that relays the UE, and/or the ID of the candidate relay UE that is located in the neighboring cell of the cell in which the UE is located and that relays the UE.

Further, after the sending module 903 sends, to UE in the list of candidate relay UEs, the third message that carries an ID of the UE, the receiving module 902 is further configured to receive a fifth message that carries an ID of the selected relay UE and that is sent by the server, where the fifth message is used to instruct the sending module 901 to send a sixth message to candidate relay UE except the selected relay UE in the list of candidate relay UEs, and the sixth message is used to instruct the candidate relay UE except the selected relay UE in the list of candidate relay UEs to stop sending the fourth message to the UE; then, the sending module 901 sends the sixth message to the candidate relay UE except the selected relay UE in the list of candidate relay UEs.

It should be noted that, because content such as specific implementation processes of modules and information exchange between the modules in the apparatus 90 shown in FIG. 9 and the apparatus 10 shown in FIG. 10 is based on a same invention concept as the method embodiments of the present invention, reference may be made to the method embodiments, and details are not described herein again.

When learning a manner of reporting to a server that user equipment UE loses a connection to a network, a sending module sends a first message to the server, where the first message is used to notify the server that the UE loses a connection to a network; a receiving module receives a second message sent by the server, where the second message is used to instruct an acquiring module and the sending module to perform a relay process; the acquiring module acquires a list of candidate relay UEs that relay the UE; then, the sending module sends a third message to candidate relay UE in the list of candidate relay UEs, where the third message is used to instruct the candidate relay UE in the list of candidate relay UEs to send a fourth message to the UE, where the fourth message is used to instruct the UE to determine selected relay UE and connect to a network by using the selected relay UE. In the present invention, it is implemented that a network side actively initiates a process of enabling UE that is not located within a coverage area of a network to connect to the network, thereby improving user experience.

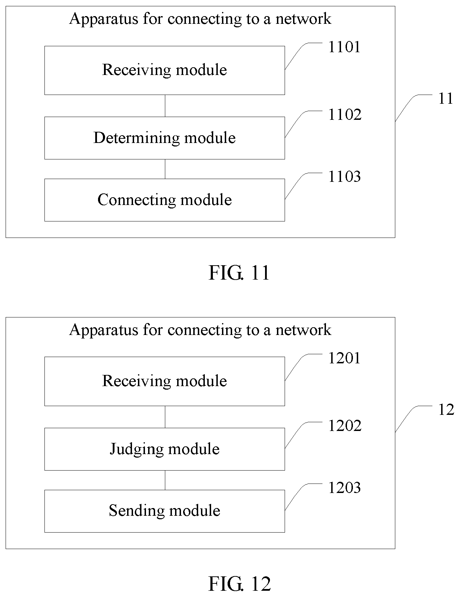

As shown in FIG. 11, an embodiment not covered by the claims, but useful for understanding the invention, provides another apparatus 11 for connecting to a network, including: a receiving module 1101, a determining module 1102, and a connecting module 1103. The apparatus is the UE in the method embodiments.

The receiving module 1101 is configured to receive a fourth message sent by candidate relay UE in a list of candidate relay UEs, and provide the fourth message for the determining module 1102, where the fourth message is used to instruct the determining module 1102 to determine selected relay UE and the connecting module 1103 to connect to a network by using the selected relay UE;
the determining module 1102 is configured to determine selected relay UE from candidate relay UEs corresponding to received fourth messages, and provide an ID of the selected relay UE for the connecting module 1103; and
the connecting module 1103 is configured to connect to a network by using the selected relay UE.

Further, when the connecting module 1103 has connected to relay UE, the connecting module 1103 sends, to a server, an eighth message that carries an ID of the relay UE, where the eighth message is used to notify the server that the connecting module 1103 has connected to a network.

Further and optionally, the fourth message carries an identity ID of the apparatus 11; the determining module 1102 is further configured to determine the selected relay UE according to the ID of the apparatus 11 that is carried in the received fourth messages.

A receiving module receives a fourth message sent by candidate relay UE in a list of candidate relay UEs, and provides the fourth message for a determining module, where the fourth message is used to instruct the determining module to determine selected relay UE and a connecting module to connect to a network by using the selected relay UE; the determining module determines selected relay UE from candidate relay UEs corresponding to received fourth messages, and provides an ID of the selected relay UE for the connecting module; the connecting module connects to a network by using the selected relay UE. In the present invention, it is implemented that a network side actively initiates a process of enabling UE that is not located within a coverage area of a network to connect to the network, thereby improving user experience.

As shown in FIG. 12, an embodiment not covered by the claims, but useful for understanding the invention, provides another apparatus 12 for connecting to a network, including: a receiving module 1201, a judging module 1202, and a sending module 1203. The apparatus is the server in the method embodiments.

The receiving module 1201 is configured to receive a first message sent by an MME, and provide the first message for the judging module 1202, where the first message is used to notify the server that UE loses a connection to a network;
the judging module 1202 is configured to determine whether the UE needs to connect to a network by using relay UE, and provide a result of the determining for the sending module 1203; and
the sending module 1203 is configured to send a second message to the MME when the result of the determining is that the UE needs to connect to the network by using the relay UE, where the second message is used to instruct the MME to perform a relay process.

Further, it is provided another apparatus 13 for connecting to a network, where the apparatus 13 for connecting to a network further includes a processing module 1204, and the processing module 1204 includes a sending unit 12041, a receiving unit 12042, and a generating unit 12043.

Optionally, the processing module 1204 is configured to generate a list of candidate relay UEs.

Specifically, the sending unit 12041 in the processing module 1204 sends an acquiring request to a GMLC, where the acquiring request includes an ID and a cell ID of the UE; the receiving unit 12042 receives a request reply message sent by the GMLC, and provides the request reply message for the generating unit 12043, where the request reply message includes an ID of first relay UE that is located in a same cell as the UE, and/or an ID of second relay UE that is located in a neighboring cell of a cell in which the UE is located; then, the generating unit 12043 generates the list of candidate relay UEs according to the request reply message provided by the receiving unit 12042, where the list of candidate relay UEs includes the ID of the first relay UE that is located in the same cell as the UE and that relays the UE, and/or an ID of the second relay UE that is located in the neighboring cell of a cell in which the UE is located and that relays the UE.

Further, when the result of the determining is that the UE needs to connect to the network by using the relay UE, the sending module 1203 sends, to the MME, the second message that carries the list of candidate relay UEs. Certainly, the sending module 1203 may send, to the MME, an independent message that carries the list of candidate relay UEs, but does not need to attach the list of candidate relay UEs to the second message.

Further, before the receiving module 1201 receives the first message sent by the MME, the sending module 1203 is further configured to send a subscription request to the MME, where the subscription request is a request for the server to subscribe to a state, of losing a connection to a network, of the UE.

Further, after the UE connects to a network, the receiving module 1201 is further configured to receive an eighth message that carries an ID of a selected relay UE and that is sent by the UE, where the eighth message is used to notify the apparatus 13 that the UE has connected to a network; then, the sending module 1203 sends, to the MME, a fifth message that carries the ID of the seclected relay UE, where the fifth message is used to instruct the MME to send a sixth message to UE except the selected relay UE in the list of candidate relay UEs, and the sixth message is used to instruct the UE except the selected relay UE in the list of candidate relay UEs to stop sending a fourth message to the UE.

A receiving module receives a fourth message sent by candidate relay UE in a list of candidate relay UEs, and provides the fourth message for a determining module, where the fourth message is used to instruct the determining module to determine selected relay UE and a connecting module to connect to a network by using the selected relay UE; the determining module determines selected relay UE from candidate relay UEs corresponding to received fourth messages, and provides an ID of the selected relay UE for the connecting module; and the connecting module connects to a network by using the selected relay UE. In the present invention, it is implemented that a network side actively initiates a process of enabling UE that is not located within a coverage area of a network to connect to the network, thereby improving user experience.

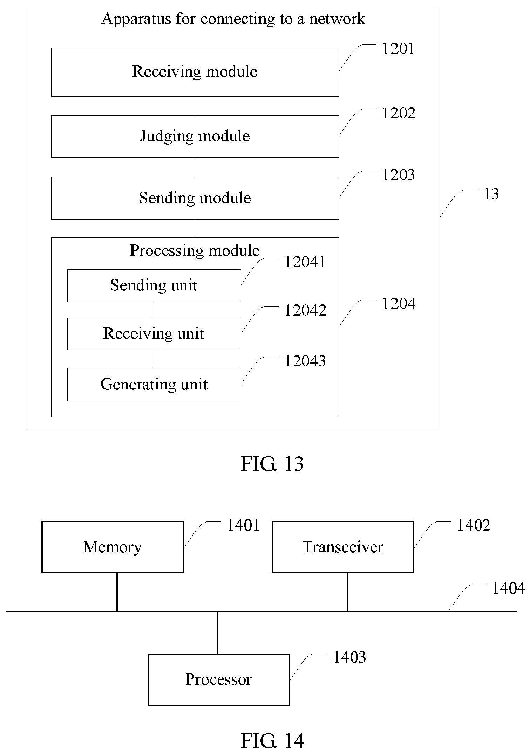

As shown in FIG. 14, FIG. 14 is a schematic structural diagram of hardware of an MME. The MME may include a memory 1401, a transceiver 1402, a processor 1403, and a bus 1404, where the memory 1401, the transceiver 1402, and the processor 1403 connect to and communicate with each other by using the bus 1404.

The memory 1401 may be a read-only memory (Read-Only Memory, ROM), a static storage device, a dynamic storage device, or a random access memory (Random Access Memory, RAM). The memory 1401 may store an operating system and another application program. When the technical solutions provided by embodiments of the present invention are being implemented by using software or firmware, program code that is used to implement the technical solutions provided by the embodiments of the present invention is stored in the memory 1401 and executed by the processor 1403.

The transceiver 1402 is configured to perform communication between the apparatus and another device or a communications network (for example, that includes but is not limited to Ethernet, a radio access network (Radio Access Network, RAN), and a wireless local area network (Wireless Local Area Network, WLAN)).

The processor 1403 may be a general central processing unit (Central Processing Unit, CPU), a microprocessor, an application-specific integrated circuit (Application-Specific Integrated Circuit, ASIC), or one or more integrated circuits, and is configured to execute a related program, so as to implement the technical solutions provided in the embodiments of the present invention.

The bus 1404 may include a channel that transmits information between each part (for example, the memory 1401, the transceiver 1402, and the processor 1403) of the apparatus.

It should be noted that, although only hardware the memory 1401, the transceiver 1402, the processor 1403, and the bus 1404 are shown in FIG. 14, in a specific implementation process, persons skilled in the art should understand that, the terminal further includes another component that is necessary for normal operating. In addition, according to a specific need, persons skilled in the art should understand that, the terminal may further include a hardware component that implements another function.

Specifically, when the MME shown in FIG. 14 is configured to implement the apparatus shown in the embodiments of FIG. 9 to FIG. 10, the transceiver 1402 in the apparatus is configured to send a first message to a server, where the first message is used to notify the server that UE loses a connection to a network; and receive a second message sent by the server, where the second message is used to instruct the processor 1403 and the transceiver 1402 to perform a relay process.

It should be noted that, before sending the first message to the server, the transceiver 1402 further needs to learn a condition of reporting to the server that the user equipment UE loses a connection to a network. There are two manners of learning, by the transceiver 1402, the condition of reporting to the server that the user equipment UE loses a connection to a network. The manners specifically include the following:
A first manner: The transceiver 1402 receives a seventh message that carries instruction information and that is sent by a base station, where the seventh message is used to notify the apparatus that the UE loses a connection to a network, and the instruction information is used to instruct the transceiver 1402 to report to the server that the UE loses a connection to a network.

A second manner: The transceiver 1402 receives a subscription request sent by the server, where the subscription request is a request for the server to subscribe to a state, of losing a connection to a network, of the UE.

The processor 1403 is configured to acquire a list of candidate relay UEs, and provide the list of candidate relay UEs for the transceiver 1402.

Specifically, an implementation manner of acquiring the list of candidate relay UEs by the processor 1403 is as follows:
Optionally, the processor 1403 acquires an ID of candidate relay UE that is located in a same cell as the UE and that relays the UE, and/or an ID of candidate relay UE that is located in a neighboring cell of a cell in which the UE is located and that relays the UE; and generates the list of candidate relay UEs, where the list of candidate relay UEs includes the ID of the candidate relay UE that is located in the same cell as the UE and that relays the UE, and/or the ID of the candidate relay UE that is located in the neighboring cell of the cell in which the UE is located and that relays the UE.

Optionally, the processor 1403 acquires the list of candidate relay UEs from the second message received by the transceiver 1402, where the second message includes the list of candidate relay UEs. A precondition is that the first message further includes a cell ID of the UE, that is, the first message that is sent by the transceiver 1402 to the server further includes the cell ID of the UE. Then, the transceiver 1402 sends, to a GMLC, an acquiring request that carries the cell ID of the UE, so that the GMLC determines an ID of UE that is in proximity to the UE.

The transceiver 1402 is further configured to send a third message to candidate relay UE in the list of candidate relay UEs, where the third message is used to instruct the candidate relay UE in the list of candidate relay UEs to send a fourth message to the UE, and the fourth message is used to instruct the UE to determine selected relay UE and connect to a network by using the selected relay UE.

Further, the transceiver 1402 is further configured to receive a fifth message that carries an ID of the selected relay UE and that is sent by the server, where the fifth message is used to instruct the transceiver 1402 to send a sixth message to candidate relay UE except the selected relay UE in the list of candidate relay UEs, and the sixth message is used to instruct the candidate relay UE except the selected relay UE in the list of candidate relay UEs to stop sending the fourth message to the transceiver 1402, and then, the transceiver 1402 sends the sixth message to the candidate relay UE except the selected relay UE in the list of candidate relay UEs according to the fifth message.

In the present invention, it is implemented that a network side actively initiates a process of enabling UE that is not located within a coverage area of a network to connect to the network, thereby improving user experience.

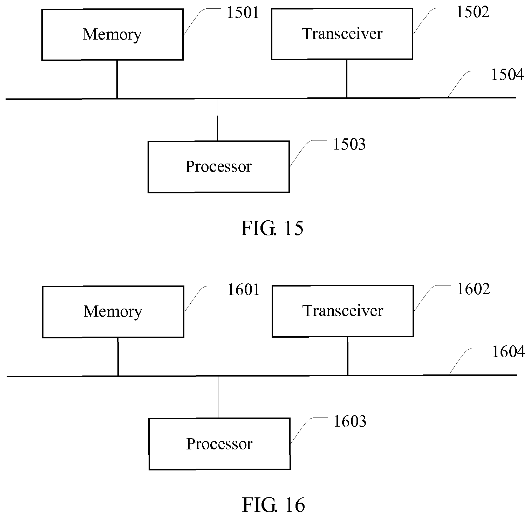

As shown in FIG. 15, FIG. 15 is a schematic structural diagram of hardware of UE. The UE may include a memory 1501, a transceiver 1502, a processor 1503, and a bus 1504, where the memory 1501, the transceiver 1502, and the processor 1503 connect to and communicate with each other by using the bus 1504.

For description of common functions of the memory 1501, the transceiver 1502, the processor 1503, and the bus 1504 in the apparatus, reference may be made to the description of the memory 1401, the transceiver 1402, the processor 1403, and the bus 1404 that are included in the MME in FIG. 14. Details are not described herein again.

It should be noted that, although only hardware the memory 1501, the transceiver 1502, the processor 1503, and the bus 1504 are shown in FIG. 15, in a specific implementation process, persons skilled in the art should understand that, the terminal further includes another component that is necessary for normal operating. In addition, according to a specific need, persons skilled in the art should understand that, the terminal may further include a hardware component that implements another function.

Specifically, when the UE shown in FIG. 15 is configured to implement the apparatus shown in the embodiment of FIG. 11, the transceiver 1502 in this apparatus is configured to receive a fourth message sent by candidate relay UE in a list of candidate relay UEs, and provide the fourth message for the processor 1503, where the fourth message is used to instruct the processor 1503 to determine selected relay UE and connect to a network by using the selected relay UE.

The processor 1503 is configured to determine selected relay UE from candidate relay UEs corresponding to received fourth messages; and connect to a network by using the selected relay UE.

Further, when the processor 1503 has connected to the selected relay UE, the transceiver 1502 is further configured to send, to the server, an eighth message that carries an ID of the selected relay UE, where the eighth message is used to notify the server that the processor 1503 has connected to a network.

Further and optionally, the fourth message carries an identity ID of the apparatus; the processor 1503 determines the selected relay UE according to the ID of the apparatus that is carried in the received fourth messages.

In this embodiment not covered by the claims, but useful for understanding the invention, it is implemented that a network side actively initiates a process of enabling UE that is not located within a coverage area of a network to connect to the network, thereby improving user experience.

As shown in FIG. 16, FIG. 16 is a schematic structural diagram of hardware of a server. The server may include a memory 1601, a transceiver 1602, a processor 1603, and a bus 1604, where the memory 1601, the transceiver 1602, and the processor 1603 connect to and communicate with each other by using the bus 1604.

For description of common functions of the memory 1601, the transceiver 1602, the processor 1603, and the bus 1604 in the apparatus, reference may be made to the description of the memory 1401, the transceiver 1402, the processor 1403, and the bus 1404 that are included in the MME in FIG. 14. Details are not described herein again.

It should be noted that, although only hardware the memory 1601, the transceiver 1602, the processor 1603, and the bus 1604 are shown in FIG. 16, in a specific implementation process, persons skilled in the art should understand that, the terminal further includes another component that is necessary for normal operating. In addition, according to a specific need, persons skilled in the art should understand that, the terminal may further include a hardware component that implements another function.

Specifically, when the server shown in FIG. 16 is configured to implement the apparatus shown in the embodiments of FIG. 12 and FIG. 13, the transceiver 1602 in this apparatus is configured to receive a first message sent by an MME, and provide the first message for the processor 1603, where the first message is used to notify the server that UE loses a connection to a network.

It should be noted that, before receiving the first message, the transceiver 1602 is further configured to send a subscription request to the MME, where the subscription request is a request for the server to subscribe to a state, of losing a connection to a network, of the UE.

The processor 1603 is configured to determine whether the UE needs to connect to a network by using relay UE, and provide a result of the determining for the transceiver 1602; and

the transceiver 1602 is configured to send a second message to the MME when the result of the determining is that the UE needs to connect to the network by using the relay UE, where the second message is used to instruct the MME to perform a relay process.

Further and optionally, the processor 1603 is further configured to generate a list of candidate relay UEs, and then, the transceiver 1602 is further configured to, when the result of the determining is that the UE needs to connect to the network by using the relay UE, send, to the MME, the second message that carries the list of candidate relay UEs. Certainly, the transceiver 1602 may send, to the MME, an independent message that carries the list of candidate relay UEs, but does not need to attach the list of candidate relay UEs to the second message.

An implementation manner of generating the list of candidate relay UEs by the processor 1603 specifically includes the following:
The processor 1603 sends an acquiring request to a GMLC, where the acquiring request includes an ID and a cell ID of the UE; the transceiver 1602 receives a request reply message sent by the GMLC, and provides the request reply message for the processor 1603, where the request reply message includes an ID of candidate relay UE that is located in a same cell as the UE and that relays the UE, and/or an ID of candidate relay UE that is located in a neighboring cell of a cell in which the UE is located and that relays the UE; and then, the processor 1603 generates the list of candidate relay UEs according to content of the request reply message, where the list of candidate relay UEs includes the ID of the candidate relay UE that is located in the same cell as the UE and that relays the UE, and/or the ID of the candidate relay UE that is located in the neighboring cell of the cell in which the UE is located and that relays the UE.

Further, after the processor 1603 connects to a network, the transceiver 1602 is further configured to receive an eighth message that carries an ID of selected relay UE and that is sent by the UE, where the eighth message is used to notify the server that the UE has connected to a network.

Further, the transceiver 1602 is further configured to send, to the MME, a fifth message that carries the ID of the selected relay UE, where the fifth message is used to instruct the MME to send a sixth message to UE except the selected relay UE in the list of candidate relay UEs, and the sixth message is used to instruct the UE except the selected relay UE in the list of candidate relay UEs to stop sending a fourth message to the UE.

In the present invention, it is implemented that a network side actively initiates a process of enabling UE that is not located within a coverage area of a network to connect to the network, thereby improving user experience.

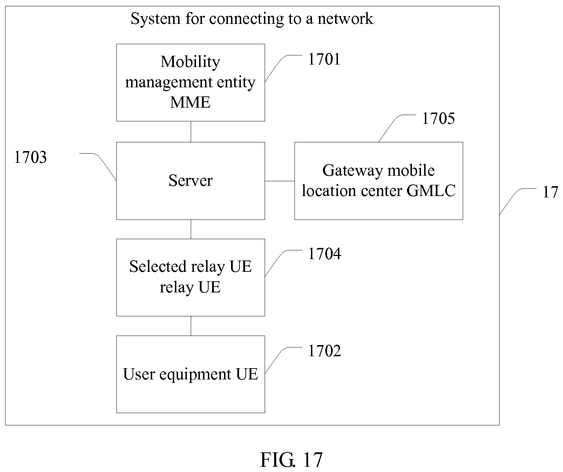

As shown in FIG. 17, an embodiment of the present invention provides a system 17 for connecting to a network, including an MME 1701, UE 1702, a server 1703, selected relay UE 1704, and a GMLC 1705, where
the MME 1701 is configured to send a first message to the server 1703, where the first message is used to notify the server 1703 that the UE 1702 loses a connection to a network; receive a second message sent by the server 1703, where the second message is used to instruct the MME 1701 to perform a relay process, where the relay process specifically includes: acquiring a list of candidate relay UEs that relay the UE 1702, and sending a third message to candidate relay UE in the list of candidate relay UEs, where the third message is used to instruct the candidate relay UE in the list of candidate relay UEs to send a fourth message to the UE 1702, and the fourth message is used to instruct the UE 1702 to determine the selected relay UE 1704 and connect to a network by using the selected relay UE 1704;
the UE 1702 is configured to receive the fourth message sent by the UE in the list of candidate relay UEs, where the fourth message is used to instruct the UE 1702 to determine selected relay UE 1704 and connect to a network by using the selected relay UE 1704; determine the selected relay UE 1704 from candidate relay UEs corresponding to received fourth messages; and connect to a network by using the selected relay UE 1704;
the server 1703 is configured to receive the first message sent by the MME 1701, where the first message is used to notify the server 1703 that the UE 1702 loses a connection to a network; and send the second message to the MME 1701 when determining that the UE 1702 needs to connect to a network by using relay UE, where the second message is used to instruct the MME 1701 to perform the relay process; and
the selected relay UE 1704 is configured to receive the third message sent by the MME 1701; and send the fourth message to the UE 1702 according to content of the third message.

Optionally, the system 17 for connecting to a network may further include the GMLC 1705 that is configured to receive an acquiring request sent by the server 1703, where the acquiring request includes an ID and a cell ID of the UE 1702, and send a request reply message to the server 1703, where the request reply message includes an ID of candidate relay UE that is located in a same cell as the UE 1702 and that relays the UE 1702, and/or an ID of candidate relay UE that is located in a neighboring cell of a cell in which the UE 1702 is located and that relays the UE 1702.

The server 1703 is further configured to send the acquiring request to the GMLC 1705; receive the request reply message sent by the GMLC 1705; select an ID of third relay UE from an ID of first relay UE and/or an ID of second relay UE according to content of the request reply message; and generate the list of candidate relay UEs, where the list of candidate relay UEs includes the ID of the candidate relay UE that is located in the same cell as the UE 1702 and that relays the UE 1702, and/or the ID of the candidate relay UE that is located in the neighboring cell of the cell in which the UE 1702 is located and that relays the UE 1702.

It should be noted that, the system 17 may also not include the GMLC 1705, that is, when generating the list of candidate relay UEs, the MME 1701 may not need to receive the list of candidate relay UEs sent by the server 1703. Therefore, although the system 17 does not include the GMLC 1705, connecting to a network by the UE 1702 can be implemented. To make a comprehensive description, that the system 17 for connecting to a network includes the GMLC 1705 is used as an example for description.

The server 1703 is further configured to receive an eighth message that carries an ID of the selected relay UE and that is sent by the UE 1702, where the eighth message is used to notify the server 1703 that the UE 1702 has connected to a network; and send, to the MME 1701, a fifth message that carries the ID of the selected relay UE, where the fifth message is used to instruct the MME 1701 to send a sixth message to UE except the selected relay UE in the list of candidate relay UEs, and the sixth message is used to instruct the UE except the selected relay UE in the list of candidate relay UEs to stop sending the fourth message to the UE 1702.

The MME 1701 is further configured to receive the fifth message sent by the server 1703; and send the sixth message to the UE except the selected relay UE in the list of candidate relay UEs according to content of the fifth message.

In the present invention, it is implemented that a network side actively initiates a process of enabling UE that is not located within a coverage area of a network to connect to the network, thereby improving user experience.

It may be clearly understood by persons skilled in the art that, for the purpose of convenient and brief description, only the division of the foregoing functional modules is described by using an example, and in an actual application, the foregoing functions may be accomplished by different functional modules according to a requirement, that is, the inner structure of the apparatus is divided into different functional modules to accomplish all or some of the functions described above. For a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the module or unit division is merely a logical function division and may be other divisions in actual implementation. For example, multiple units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or a part of the technical solutions may be implemented in the form of a software product. The computer software product is stored in a storage medium and includes several instructions for instructing a computer device (which may be a personal computer, a server, a network device, or the like) or a processor (processor) to perform all or a part of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementation manners of the present invention, but are not intended to limit the protection scope of the present invention. The protection scope of the present invention shall be subject to the protection scope of the claims.

## Claims

1. A method for connecting to a network, comprising:
receiving, by a mobility management entity, MME, a delete context request that carries instruction information and that is sent by a base station, wherein the delete context request is used to notify the MME that the UE loses a connection to a network, and the instruction information is used to instruct the MME to report to a server that the UE loses a connection to a network;
sending (101), by the MME, a first message to the server, wherein the first message is used to notify the server that UE loses a connection to a network; and
receiving (102), by the MME, a second message sent by the server, wherein the second message is used to instruct the MME to perform a relay process, wherein
the relay process specifically comprises:
acquiring (103), by the MME, a list of candidate relay UEs that relay the UE; and
sending (104), by the MME, a third message to candidate relay UE in the list of candidate relay UEs, wherein the third message is used to instruct the candidate relay UE in the list of candidate relay UEs to send a fourth message to the UE, and the fourth message is used by the UE to determine selected relay UE and connect to a network by using the selected relay UE.

2. The method for connecting to a network according to claim 1, wherein the acquiring, by the MME, a list of candidate relay UEs that relay the UE comprises:
acquiring, by the MME, an identity ID of candidate relay UE that is located in a same cell as the UE and that relays the UE, and/or an ID of candidate relay UE that is located in a neighboring cell of a cell in which the UE is located and that relays the UE; and
generating, by the MME, the list of candidate relay UEs, wherein the list of candidate relay UEs comprises the ID of the candidate relay UE that is located in the same cell as the UE and that relays the UE, and/or the ID of the candidate relay UE that is located in the neighboring cell of the cell in which the UE is located and that relays the UE.

3. The method for connecting to a network according to claim 1, wherein the first message comprises a cell ID of the UE, and the second message comprises the list of candidate relay UEs that relay the UE; and
the acquiring, by the MME, a list of candidate relay UEs that relay the UE comprises:
acquiring, by the MME, the list of candidate relay UEs from the second message.

4. The method for connecting to a network according to any one of claims 1 to 3, wherein after the sending, by the MME, a third message to candidate relay UE in the list, the method further comprises:
receiving, by the MME, a fifth message that carries an ID of the selected relay UE and that is sent by the server, wherein the fifth message is used to instruct the MME to send a sixth message to candidate relay UE except the selected relay UE in the list of candidate relay UEs, and the sixth message is used to instruct the candidate relay UE except the selected relay UE in the list of candidate relay UEs to stop sending the fourth message to the UE.

5. An mobility management entity for connecting to a network, comprising:
a sending module (901), configured to send a first message to a server, wherein the first message is used to notify the server that the UE loses a connection to a network;
a receiving module (902), configured to receive a second message sent by the server, wherein the second message is used to instruct an acquiring module and the sending module to perform a relay process; and
the acquiring module (903), configured to acquire a list of candidate relay UEs that relay the UE, wherein
the receiving module is further configured to receive a delete context request that carries instruction information and that is sent by a base station, wherein the delete context request is used to notify the apparatus that the UE loses a connection to a network, and the instruction information is used to instruct the sending module to report to the server that the UE loses a connection to a network;
the sending module is further configured to send a third message to candidate relay UE in the list of candidate relay UEs, wherein the third message is used to instruct the candidate relay UE in the list of candidate relay UEs to send a fourth message to the UE, and the fourth message is used by the UE to determine selected relay UE and connect to a network by using the selected relay UE.

6. The mobility management entity according to claim 5, wherein the acquiring module comprises:
an acquiring unit (9031), configured to acquire an identity ID of candidate relay UE that is located in a same cell as the UE and that relays the UE, and/or an ID of candidate relay UE that is located in a neighboring cell of a cell in which the UE is located and that relays the UE, and provide an acquiring result for a generating unit; and
the generating unit (9032), configured to generate the list of candidate relay UEs according to the acquiring result provided by the acquiring unit, wherein the list of candidate relay UEs comprises the ID of the candidate relay UE that is located in the same cell as the UE and that relays the UE, and/or the ID of the candidate relay UE that is located in the neighboring cell of the cell in which the UE is located and that relays the UE.

7. The mobility management entity according to claim 6, wherein the first message comprises a cell ID of the UE, and the second message comprises the list of candidate relay UEs that relay the UE; and
the acquiring module is further configured to acquire the list of candidate relay UEs from the second message.

8. The mobility management entity according to any one of claims 5 to 7, wherein:
the receiving module is further configured to receive a fifth message that carries an ID of the selected relay UE and that is sent by the server, wherein the fifth message is used to instruct the sending module to send a sixth message to candidate relay UE except the selected relay UE in the list of candidate relay UEs, and the sixth message is used to instruct the candidate relay UE except the selected relay UE in the list of candidate relay UEs to stop sending the fourth message to the UE; and
the sending module is further configured to send the sixth message to the candidate relay UE except the selected relay UE in the list of candidate relay UEs.

## Patentansprüche

1. Verfahren zum Verbinden mit einem Netz, die folgenden Schritte umfassend:
Empfangen, durch eine Mobilitätsmanagemententität, MME, einer Kontext-Löschen-Anforderung, die Anweisungsinformationen führt und die durch eine Basisstation gesendet wurde, wobei die Kontext-Löschen-Anforderung dafür verwendet wird, die MME zu benachrichtigen, dass das UE eine Verbindung zu einem Netz verliert, und die Anweisungsinformationen dafür verwendet werden, die MME anzuweisen, einem Server zu melden, dass das UE eine Verbindung zu einem Netz verliert;
Senden (101), durch die MME, einer ersten Nachricht an den Server, wobei die erste Nachricht dafür verwendet wird, den Server zu benachrichtigen, dass das UE eine Verbindung mit einem Netz verliert; und
Empfangen (102), durch die MME, einer zweiten durch den Server gesendeten Nachricht, wobei die zweite Nachricht dafür verwendet wird, die MME anzuweisen, einen Weiterleitungsprozess durchzuführen, wobei der Weiterleitungsprozess insbesondere die folgenden Schritte umfasst:
Erfassen (103), durch die MME, einer Liste von Kandidaten-Weiterleitungs-UEs, die das UE weiterleiten; und
Senden (104), durch die MME, einer dritten Nachricht an ein Kandidaten-Weiterleitungs-UE in der Liste von Kandidaten-Weiterleitungs-UEs, wobei die dritte Nachricht dafür verwendet wird, das Kandidaten-Weiterleitungs-UE in der Liste von Kandidaten-Weiterleitungs-UEs anzuweisen, eine vierte Nachricht an das UE zu senden, und die vierte Nachricht durch das UE dafür verwendet wird, ein ausgewähltes Weiterleitungs-UE zu bestimmen und sich unter Verwendung des ausgewählten Weiterleitungs-UE mit einem Netz zu verbinden.

2. Verfahren zum Verbinden mit einem Netz nach Anspruch 1, wobei das Erfassen, durch die MME, einer Liste von Kandidaten-Weiterleitungs-UEs, die das UE weiterleiten, die folgenden Schritte umfasst:
Erfassen, durch die MME, einer Identitäts-ID eines Kandidaten-Weiterleitungs-UE, das sich in einer selben Zelle wie das UE befindet und das das UE weiterleitet und/oder einer ID eines Kandidaten-Weiterleitungs-UE, das sich in einer Nachbarzelle einer Zelle, in welcher sich das UE befindet, befindet und das das UE weiterleitet; und
Erzeugen, durch die MME, der Liste von Kandidaten-Weiterleitungs-UEs, wobei die Liste von Kandidaten-Weiterleitungs-UEs die ID des Kandidaten-Weiterleitungs-UE, das sich in derselben Zelle wie das UE befindet und das das UE weiterleitet, und/oder die ID des Kandidaten-Weiterleitungs-UE, das sich in der Nachbarzelle der Zelle, in welcher sich das UE befindet, befindet und das das UE weiterleitet, umfasst.

3. Verfahren zum Verbinden mit einem Netz nach Anspruch 1, wobei die erste Nachricht eine Zellen-ID des UE umfasst und die zweite Nachricht die Liste von Kandidaten-Weiterleitungs-UEs, die das UE weiterleiten, umfasst; und
das Erfassen, durch die MME, einer Liste von Kandidaten-Weiterleitungs-UEs, die die UE weiterleiten, den folgenden Schritt umfasst:
Erfassen, durch die MME, der Liste von Kandidaten-Weiterleitungs-UEs aus der zweiten Nachricht.

4. Verfahren zum Verbinden mit einem Netz nach einem der Ansprüche 1 bis 3, wobei das Verfahren nach dem Senden, durch die MME, einer dritten Nachricht an ein Kandidaten-Weiterleitungs-UE in der Liste ferner den folgenden Schritt umfasst:
Empfangen, durch die MME, einer fünften Nachricht, die eine ID des ausgewählten Weiterleitungs-UE führt und die durch den Server gesendet wurde, wobei die fünfte Nachricht dafür verwendet wird, die MME anzuweisen, eine sechste Nachricht an ein Kandidaten-Weiterleitungs-UE, mit Ausnahme der ausgewählten Weiterleitungs-UE, in der Liste von Kandidaten-Weiterleitungs-UEs zu senden, und die sechste Nachricht dafür verwendet wird, das Kandidaten-Weiterleitungs-UE, unter Ausnahme des ausgewählten Weiterleitungs-UE, in der Liste von Kandidaten-Weiterleitungs-UEs anzuweisen, das Senden der vierten Nachricht an das UE zu stoppen.

5. Mobilitätsmanagemententität zum Verbinden mit einem Netz, Folgendes umfassend:
ein Sendemodul (901), das ausgelegt ist zum Senden einer ersten Nachricht an einen Server, wobei die erste Nachricht dafür verwendet wird, den Server zu benachrichtigen, dass das UE eine Verbindung mit einem Netz verliert;
ein Empfangsmodul (902), das ausgelegt ist zum Empfangen einer zweiten durch den Server gesendeten Nachricht, wobei die zweite Nachricht dafür verwendet wird, ein Erfassungsmodul und das Sendemodul anzuweisen, einen Weiterleitungsprozess durchzuführen; und
das Erfassungsmodul (903), das ausgelegt ist zum Erfassen einer Liste von Kandidaten-Weiterleitungs-UEs, die das UE weiterleiten, wobei
das Empfangsmodul ferner ausgelegt ist zum Empfangen einer Kontext-Löschen-Anforderung, die Anweisungsinformationen führt und die durch eine Basisstation gesendet wurde, wobei die Kontext-Löschen-Anforderung dafür verwendet wird, die Vorrichtung zu benachrichtigen, dass das UE eine Verbindung zu einem Netz verliert, und die Anweisungsinformationen dafür verwendet werden, das Sendemodul anzuweisen, dem Server zu melden, dass das UE eine Verbindung zu einem Netz verliert;
das Sendemodul ferner ausgelegt ist zum Senden einer dritten Nachricht an ein Kandidaten-Weiterleitungs-UE in der Liste von Kandidaten-Weiterleitungs-UEs, wobei die dritte Nachricht dafür verwendet wird, das Kandidaten-Weiterleitungs-UE in der Liste von Kandidaten-Weiterleitungs-UEs anzuweisen, eine vierte Nachricht an das UE zu senden, und die vierte Nachricht durch das UE dafür verwendet wird, ein ausgewähltes Weiterleitungs-UE zu bestimmen und sich unter Verwendung des ausgewählten Weiterleitungs-UE mit einem Netz zu verbinden.

6. Mobilitätsmanagemententität nach Anspruch 5, wobei das Erfassungsmodul Folgendes umfasst:
eine Erfassungseinheit (9031), die ausgelegt ist zum Erfassen einer Identitäts-ID eines Kandidaten-Weiterleitungs-UE, das sich in einer selben Zelle wie das UE befindet und das das UE weiterleitet und/oder einer ID einer Kandidaten-Weiterleitungs-UE, das sich in einer Nachbarzelle einer Zelle, in welcher sich das UE befindet, befindet und das das UE weiterleitet; und Bereitstellen eines Erfassungsergebnisses für eine Erzeugungseinheit; und
die Erzeugungseinheit (9032), die ausgelegt ist zum Erzeugen der Liste von Kandidaten-Weiterleitungs-UEs gemäß dem durch die Erfassungseinheit bereitgestellten Erfassungsergebnis, wobei die Liste von Kandidaten-Weiterleitungs-UEs die ID des Kandidaten-Weiterleitungs-UE, das sich in derselben Zelle wie das UE befindet und das das UE weiterleitet, und/oder die ID des Kandidaten-Weiterleitungs-UE, das sich in der Nachbarzelle der Zelle, in welcher sich das UE befindet, befindet und das das UE weiterleitet, umfasst.

7. Mobilitätsmanagemententität nach Anspruch 6, wobei die erste Nachricht eine Zellen-ID des UE umfasst und die zweite Nachricht die Liste von Kandidaten-Weiterleitungs-UEs, die das UE weiterleiten, umfasst; und
das Erfassungsmodul ferner ausgelegt ist zum Erfassen der Liste von Kandidaten-Weiterleitungs-UEs aus der zweiten Nachricht.

8. Mobilitätsmanagemententität nach einem der Ansprüche 5 bis 7, wobei:
das Empfangsmodul ferner ausgelegt ist zum Empfangen einer fünften Nachricht, die eine ID des ausgewählten Weiterleitungs-UE führt und die durch den Server gesendet wurde, wobei die fünfte Nachricht dafür verwendet wird, das Sendemodul anzuweisen, eine sechste Nachricht an ein Kandidaten-Weiterleitungs-UE, mit Ausnahme des ausgewählten Weiterleitungs-UE, in der Liste von Kandidaten-Weiterleitungs-UEs zu senden, und die sechste Nachricht dafür verwendet wird, das Kandidaten-Weiterleitungs-UE, unter Ausnahme des ausgewählten Weiterleitungs-UE, in der Liste von Kandidaten-Weiterleitungs-UEs anzuweisen, das Senden der vierten Nachricht an das UE zu stoppen; und
das Sendemodul ferner ausgelegt ist zum Senden der sechsten Nachricht an das Kandidaten-Weiterleitungs-UE, unter Ausnahme des ausgewählten Weiterleitungs-UE, in der Liste von Kandidaten-Weiterleitungs-UEs.

## Revendications

1. Procédé pour la connexion à un réseau, comprenant les étapes suivantes :
réception, par une entité de gestion de la mobilité, notée MME, d'une requête de suppression de contexte véhiculant des informations d'instruction et envoyée par une station de base, la requête de suppression de contexte étant utilisée pour notifier à la MME que l'UE perd une connexion à un réseau, et les informations d'instruction étant utilisées pour donner pour instruction à la MME de signaler à un serveur que l'UE perd une connexion à un réseau ;
envoi (101), par la MME, d'un premier message au serveur, le premier message étant utilisé pour notifier au serveur qu'un UE perd une connexion à un réseau ; et
réception (102), par la MME, d'un deuxième message envoyé par le serveur, le deuxième message étant utilisé pour donner pour instruction à la MME d'exécuter un processus de relais, le processus de relais comprenant plus particulièrement les étapes suivantes :
acquisition (103), par la MME, d'une liste d'UE de relais candidats relayant l'UE ; et
envoi (104), par la MME, d'un troisième message à un UE de relais candidat dans la liste d'UE de relais candidats, le troisième message étant utilisé pour donner pour instruction à l'UE de relais candidat dans la liste d'UE de relais candidats d'envoyer un quatrième message à l'UE, et le quatrième message étant utilisé par l'UE pour déterminer un UE de relais sélectionné et se connecter à un réseau au moyen de l'UE de relais sélectionné.

2. Procédé pour la connexion à un réseau selon la revendication 1, dans lequel l'étape d'acquisition, par la MME, d'une liste d'UE de relais candidats relayant l'UE comprend les étapes suivantes :
acquisition, par la MME, d'une identité, notée ID, d'un UE de relais candidat situé dans une même cellule que l'UE et relayant l'UE, et/ou une ID d'un UE de relais candidat situé dans une cellule voisine d'une cellule dans laquelle l'UE est situé et relayant l'UE ; et
génération, par la MME, de la liste d'UE de relais candidats, la liste d'UE de relais candidats comprenant l'ID de l'UE de relais candidat situé dans la même cellule que l'UE et relayant l'UE et/ou l'ID de l'UE de relais candidat situé dans la cellule voisine de la cellule dans laquelle l'UE est situé et relayant l'UE.

3. Procédé pour la connexion à un réseau selon la revendication 1, dans lequel le premier message comprend une ID de cellule de l'UE, et le deuxième message comprend la liste d'UE de relais candidats relayant l'UE ; et
l'étape d'acquisition, par la MME, d'une liste d'UE de relais candidats relayant l'UE comprend l'étape suivante :
acquisition, par la MME, de la liste d'UE de relais candidats à partir du deuxième message.

4. Procédé pour la connexion à un réseau selon l'une quelconque des revendications 1 à 3, lequel procédé comprenant en outre, suite à l'étape d'envoi, par la MME, d'un troisième message à un UE de relais candidat dans la liste, l'étape suivante :
réception, par la MME, d'un cinquième message véhiculant une ID de l'UE de relais sélectionné et envoyé par le serveur, le cinquième message étant utilisé pour donner pour instruction à la MME d'envoyer un sixième message à un UE de relais candidat excepté l'UE de relais sélectionné dans la liste d'UE de relais candidats, et le sixième message étant utilisé pour donner pour instruction à l'UE de relais candidat excepté l'UE de relais sélectionné dans la liste d'UE de relais candidats d'interrompre l'envoi du quatrième message à l'UE.

5. Entité de gestion de la mobilité pour la connexion à un réseau, comprenant :
un module d'envoi (901), configuré pour envoyer un premier message à un serveur, le premier message étant utilisé pour notifier au serveur que l'UE perd une connexion à un réseau ;
un module de réception (902), configuré pour recevoir un deuxième message envoyé par le serveur, le deuxième message étant utilisé pour donner pour instruction à un module d'acquisition et au module d'envoi d'exécuter un processus de relais ; et
le module d'acquisition (903), configuré pour acquérir une liste d'UE de relais candidats relayant l'UE,
le module de réception étant configuré en outre pour recevoir une requête de suppression de contexte véhiculant des informations d'instruction et envoyée par une station de base, la requête de suppression de contexte étant utilisée pour notifier à l'appareil que l'UE perd une connexion à un réseau, et les informations d'instruction étant utilisées pour donner pour instruction au module d'envoi de signaler au serveur que l'UE perd une connexion à un réseau ;
le module d'envoi étant configuré en outre pour envoyer un troisième message à un UE de relais candidat dans la liste d'UE de relais candidats, le troisième message étant utilisé pour donner pour instruction à l'UE de relais candidat dans la liste d'UE de relais candidats d'envoyer un quatrième message à l'UE, et le quatrième message étant utilisé par l'UE pour déterminer un UE de relais sélectionné et se connecter à un réseau au moyen de l'UE de relais sélectionné.

6. Entité de gestion de la mobilité selon la revendication 5, dans laquelle le module d'acquisition comprend :
une unité d'acquisition (9031), configurée pour acquérir une identité, notée ID, d'un UE de relais candidat situé dans une même cellule que l'UE et relayant l'UE, et/ou une ID d'un UE de relais candidat situé dans une cellule voisine d'une cellule dans laquelle l'UE est situé et relayant l'UE, et fournir un résultat d'acquisition pour une unité de génération ; et
l'unité de génération (9032), configurée pour générer la liste d'UE de relais candidats selon le résultat d'acquisition fourni par l'unité d'acquisition, la liste d'UE de relais candidats comprenant l'ID de l'UE de relais candidat situé dans la même cellule que l'UE et relayant l'UE et/ou l'ID de l'UE de relais candidat situé dans la cellule voisine de la cellule dans laquelle l'UE est situé et relayant l'UE.

7. Entité de gestion de la mobilité selon la revendication 6, dans laquelle le premier message comprend une ID de cellule de l'UE, et le deuxième message comprend la liste d'UE de relais candidats relayant l'UE ; et
le module d'acquisition est configuré en outre pour acquérir la liste d'UE de relais candidats à partir du deuxième message.

8. Entité de gestion de la mobilité selon l'une quelconque des revendications 5 à 7, dans laquelle :
le module de réception est configuré en outre pour recevoir un cinquième message véhiculant une ID de l'UE de relais sélectionné et envoyé par le serveur, le cinquième message étant utilisé pour donner pour instruction au module d'envoi d'envoyer un sixième message à un UE de relais candidat excepté l'UE de relais sélectionné dans la liste d'UE de relais candidats, et le sixième message étant utilisé pour donner pour instruction à l'UE de relais candidat excepté l'UE de relais sélectionné dans la liste d'UE de relais candidats d'interrompre l'envoi du quatrième message à l'UE ; et
le module d'envoi est configuré en outre pour envoyer le sixième message à l'UE de relais candidat excepté l'UE de relais sélectionné dans la liste d'UE de relais candidats.
